# EUROPEAN PATENT APPLICATION

(11) **EP 4 765 407 A1**
(43) Date of publication of application: **24.06.2026**
(21) Application number: 25822419.5
(22) Date of filing: 24.01.2025
(51) Int. Cl.: H01M 50/296, H01M 50/505, H01M 50/249

(54) **BATTERY PACK AND VEHICLE INCLUDING SAME**

(30) Priority: 14.06.2024 KR 20240077831
(71) Applicant: LG Energy Solution, Ltd., Seoul 07335 (KR)
(72) Inventor: AHN, Jun-Young, Daejeon 34122 (KR); PARK, Jong-Sun, Daejeon 34122 (KR); LEE, Yong-Ho, Daejeon 34122 (KR); JEONG, Eui-Cheol, Daejeon 34122 (KR); JUNG, In-Hyuk, Daejeon 34122 (KR); CHUNG, Jae-Hun, Daejeon 34122 (KR); JO, Yong-Hyuck, Daejeon 34122 (KR); YANG, Jin-Oh, Daejeon 34122 (KR)
(74) Representative: Goddar, Heinz J.
(86) International application number: PCT/KR2025/001534
(87) International publication number: WO 2025/258786

(57) **Abstract**

A battery pack according to an embodiment of the present disclosure includes: a first cell array structure having a plurality of battery cells and a first end frame at one end, and disposed to a side in a first direction; a second cell array structure having a plurality of battery cells and a second end frame at one end, and disposed to a side in a second direction so as to be stacked with the first cell array structure; and a first connecting bus-bar configured to electrically connect the first cell array structure and the second cell array structure stacked on each other, wherein the first end frame and the second end frame may have different electrode terminal structures.

## Description

### TECHNICAL FIELD

The present disclosure relates to a battery pack and a vehicle including the same and, more specifically, to a battery pack including a multi-layered cell array structure capable of increasing the commonality ratio between the cell array structures and improving energy efficiency, and a vehicle including the same.

This application is based on and claims priority from Korean Patent Application No. 10-2024-0077831, filed on June 14, 2024, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithium-polymer batteries, nickel-cadmium batteries, nickel-hydrogen batteries, nickel-zinc batteries, and the like. The operating voltage of this unit secondary battery cell, that is, the unit battery cell, is approximately 2.5V to 4.5V. Therefore, when an output voltage higher than this is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack may be set in various ways depending on the required output voltage or charge/discharge capacity.

Recently, medium- and large-sized battery packs applied to electric vehicles or the like are configured to have a large number of battery cells with higher cell capacities to increase at least one of output and capacity, and these battery cells are electrically connected through bus-bars.

Such medium- and large-sized battery packs may have a problem of safety of the electrical connection structure of the bus-bars. In addition, as the number of battery cells increases, the structural connection of the bus-bars becomes more complex, so that the current path corresponding to the flow of current also becomes more complex.

In addition, the bus-bar is a resistor having a certain electric resistance, and as its length increases, its electric resistance also increases, so its length needs to be shortened. However, shortening of the length of the bus-bar requires changes in other components inside the battery pack, which may lower the productivity of the battery pack.

### DISCLOSURE

### Technical Problem

The present disclosure is designed to solve the problems of the related art, and therefore the present disclosure is directed to providing a battery pack with optimized electrical connection and a vehicle including the same.

In addition, the present disclosure is to provide a battery pack with significantly increased commonality ratio and a vehicle including the same.

In addition, the present disclosure is to provide a battery pack with improved productivity and a vehicle including the same.

In addition, the present disclosure is to provide a battery pack with reduced cost and reduced weight, and a vehicle including the same.

In addition, the present disclosure is to provide a battery pack with improved energy efficiency and energy density, and a vehicle including the same.

In addition, the present disclosure is to provide a battery pack with increased energy capacity and a vehicle including the same.

In addition, the present disclosure is to provide a battery pack with improved assemblability and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a first cell array structure having a plurality of battery cells and a first end frame at one end, and disposed to a side in a first direction; a second cell array structure having a plurality of battery cells and a second end frame at one end, and disposed to a side in a second direction so as to be stacked with the first cell array structure; and a first connecting bus-bar configured to electrically connect the first cell array structure and the second cell array structure stacked on each other, wherein the first end frame and the second end frame may have different electrode terminal structures.

The first cell array structure may include: a 1-1st electrode terminal having a first polarity and disposed to a side in a third direction; and a 1-2nd electrode terminal having a second polarity and disposed to a side in a fourth direction, and the second cell array structure may include: a 2-1st electrode terminal having the first polarity and disposed to the side in the third direction; and a 2-2nd electrode terminal having the second polarity and disposed to the side in the fourth direction. In addition, a distance between the 1-2nd electrode terminal and the 2-1st electrode terminal may be configured to be shorter than a distance between the 1-1st electrode terminal and the 2-2nd electrode terminal, and the first connecting bus-bar may be configured to electrically connect the 1-2nd electrode terminal and the 2-1st electrode terminal.

The first connecting bus-bar may connect the 1-2nd electrode terminal and the 2-1st electrode terminal with a shortest distance.

The 1-2nd electrode terminal and the 2-1st electrode terminal may be configured in a flat shape having a non-protruding surface exposed to a predetermined area in the first end frame and the second end frame, respectively.

The battery pack according to the present disclosure may further include a first fastening member configured to connect the first connecting bus-bar to the 1-2nd electrode terminal and the 2-1st electrode terminal, and the first fastening member may be fastened in a direction parallel to a direction in which the non-protruding surfaces of the 1-2nd electrode terminal and the 2-1st electrode terminal face.

The battery pack according to the present disclosure may further include: a plurality of the stack assemblies each configured as the first cell array structure and the second cell array structure stacked on each other and the first connecting bus-bar electrically connected to the first cell array structure and the second cell array structure; and at least one second connecting bus-bar configured to electrically connect two adjacent stack assemblies.

The second connecting bus-bar may electrically connect the 1-1st electrode terminal of the stack assembly disposed to the side in the fourth direction and the 2-2nd electrode terminal of the stack assembly disposed to the side in the third direction between the two adjacent stack assemblies.

A distance between the 1-1st electrode terminal of the stack assembly disposed to the side in the fourth direction and the 2-2nd electrode terminal of the stack assembly disposed to the side in the third direction between the two adjacent stack assemblies may be configured to be shorter than a distance between the 2-1st electrode terminal of the stack assembly disposed to the side in the fourth direction and the 1-2nd electrode terminal of the stack assembly disposed to the side in the third direction.

The second connecting bus-bar may connect the 1-1st electrode terminal of the stack assembly disposed to the side in the fourth direction and the 2-2nd electrode terminal of the stack assembly disposed to the side in the third direction with a shortest distance.

The 1-1st electrode terminal and the 2-2nd electrode terminal may be configured in a protruding shape to protrude by a predetermined length from the first end frame and the second end frame, respectively, so as to have a protruding surface facing at least one of the first direction and the second direction.

The battery pack according to the present disclosure may further include a second fastening member configured to connect the second connecting bus-bar to the 1-1st electrode terminal and the 2-2nd electrode terminal, and the second fastening member may be fastened in a direction parallel to a direction in which the protruding surfaces of the 1-1st electrode terminal and the 2-2nd electrode terminal face.

Components, excluding the first end frame and the second end frame, of the first cell array structure and the second cell array structure may be configured to be identical to each other.

In another aspect of the present disclosure, there is provided a vehicle including at least one battery pack according to the present disclosure.

### Advantageous Effects

According to the present disclosure, it is possible to provide a battery pack with optimized electrical connection by the first cell array structure, the second cell array structure, and the first connecting bus-bar, and a vehicle including the same.

In addition, it is possible to provide a battery pack with significantly increased commonality ratio by the first cell array structure, the second cell array structure, and the first connecting bus-bar, and a vehicle including the same.

In addition, it is possible to provide a battery pack with improved productivity by the first cell array structure, the second cell array structure, and the first connecting bus-bar, and a vehicle including the same.

In addition, it is possible to provide a battery pack with reduced cost and reduced weight by the first cell array structure, the second cell array structure, and the first connecting bus-bar, and a vehicle including the same.

In addition, it is possible to provide a battery pack with improved energy efficiency and energy density by the first cell array structure, the second cell array structure, and the first connecting bus-bar, and a vehicle including the same.

In addition, it is possible to provide a battery pack with increased energy capacity by a plurality of stack assemblies and a second connecting bus-bar, and a vehicle including the same.

In addition, it is possible to provide a battery pack with improved commonality ratio and energy efficiency by a plurality of stack assemblies and a second connecting bus-bar, and a vehicle including the same.

In addition, it is possible to a battery pack with reduced cost and reduced weight by a plurality of stack assemblies and a second connecting bus-bar, and a vehicle including the same.

In addition, it is possible to provide a battery pack with improved productivity and assemblability, and a vehicle including the same.

The effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view illustrating a battery pack according to an embodiment of the present disclosure.
FIG. 2 is a perspective view illustrating a first cell array structure and a second cell array structure stacked on each other in a battery pack according to an embodiment of the present disclosure.
FIG. 3 is a front view illustrating a first cell array structure and a second cell array structure stacked on each other in a battery pack according to an embodiment of the present disclosure.
FIG. 4 is a perspective view illustrating a first end frame separated from a first cell array structure in a battery pack according to an embodiment of the present disclosure.
FIG. 5 is a perspective view illustrating a second end frame separated from a second cell array structure in a battery pack according to an embodiment of the present disclosure.
FIG. 6 is an enlarged perspective view illustrating a first connecting bus-bar separated from a first cell array structure and a second cell array structure stacked on each other in a battery pack according to an embodiment of the present disclosure.
FIG. 7 is a perspective view illustrating a first connecting bus-bar of a battery pack according to a modified embodiment of the present disclosure.
FIG. 8 is a perspective view illustrating a plurality of stack assemblies disposed in a battery pack according to an embodiment of the present disclosure.
FIG. 9 is an enlarged perspective view illustrating a plurality of stack assemblies disposed in a battery pack according to an embodiment of the present disclosure.
FIG. 10 is a front view illustrating a battery pack in which a second connecting bus-bar is separated from a plurality of stack assemblies according to an embodiment of the present disclosure.
FIG. 11 is a perspective view illustrating a second connecting bus-bar of a battery pack according to another modified embodiment of the present disclosure.
FIG. 12 is an exploded perspective view illustrating a first cell array structure and a second cell array structure of a battery pack according to an embodiment of the present disclosure.
FIG. 13 is a drawing illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

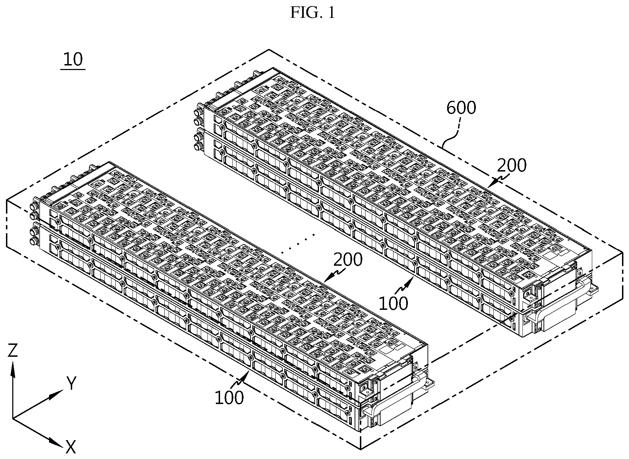

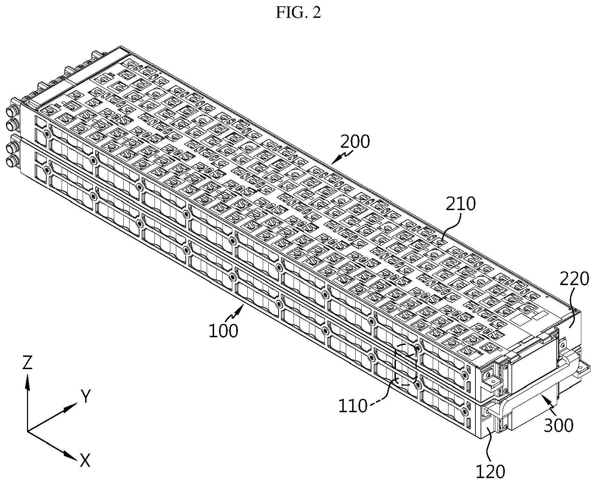

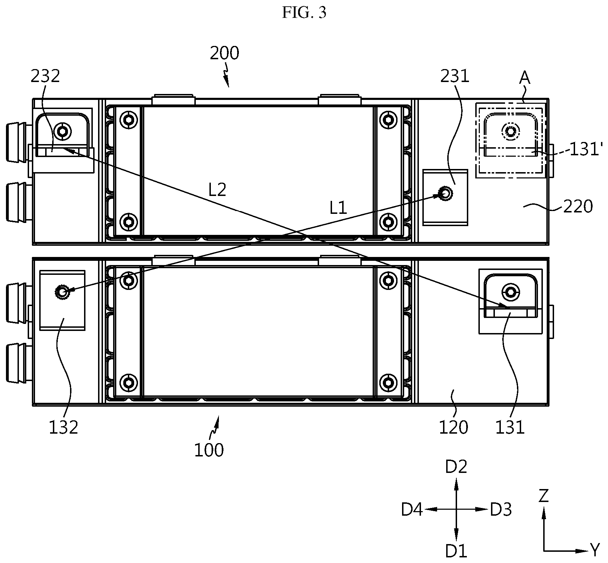

FIG. 1 is a perspective view illustrating a battery pack according to an embodiment of the present disclosure, FIG. 2 is a perspective view illustrating a first cell array structure and a second cell array structure stacked on each other in a battery pack according to an embodiment of the present disclosure, and FIG. 3 is a front view illustrating a first cell array structure and a second cell array structure stacked on each other in a battery pack according to an embodiment of the present disclosure.

Hereinafter, a battery pack 10 according to an embodiment of the present disclosure will be described in detail with reference to FIGS. 1 to 3. The battery pack 10 according to an embodiment of the present disclosure may include a first cell array structure 100, a second cell array structure 200, and a first connecting bus-bar 300.

The battery pack 10 may have a three-dimensional structure with a predetermined length and width or a predetermined width and length in the X-axis direction and the Y-axis direction, respectively, and a predetermined height in the Z-axis direction. Such a battery pack 10 may have a structure suitable for mounting to a vehicle body.

The first cell array structure 100 may be provided with a plurality of battery cells 110. The battery cell 110 may be a secondary battery, and may be configured as a cylindrical secondary battery, a pouch-type secondary battery, or a prismatic secondary battery. Hereinafter, a description will be made on the assumption that the plurality of battery cells 110 are configured as cylindrical secondary batteries in the present embodiment, but the disclosure is not limited thereto, and a pouch-type secondary battery or a prismatic secondary battery may also be applied to the battery cell 110.

In the first cell array structure 100, the plurality of battery cells 110 may be arranged in a horizontal direction parallel to the X-Y plane and perpendicular to the Z-axis direction. The first cell array structure 100 may be understood as a single assembly or structure in which a plurality of battery cells 110 are arranged as described above.

The first cell array structure 100 may include a first end frame 120 at one end. Here and hereinafter, one end may be understood as the end, for example, on the front side or to the side in the +X-axis direction. The first end frame 120 may have an electrode terminal structure. For example, the first end frame 120 may include a first electrode terminal 130, which will be described later.

The first cell array structure 100 may be disposed to the side in a first direction D1. Here, the first direction D1 may be understood as, for example, the downward direction or the -Z-axis direction.

The second cell array structure 200 may be provided with a plurality of battery cells 210. The second cell array structure 200, in addition to the plurality of battery cells 210, may be configured to have components, excluding the second end frame 220 to be described below, substantially identical to those of the first cell array structure 100. Accordingly, unless otherwise specifically stated, the descriptions of the configurations or components of the first cell array structure 100 may be applied to the corresponding configurations or components of the second cell array structure 200.

The second cell array structure 200 may have a second end frame 220 at one end. The second end frame 220 may be disposed on the same side as the first end frame 120. The second end frame 220 may have an electrode terminal structure. For example, the second end frame 220 may have a second electrode terminal 230 to be described below.

The second cell array structure 200 may be disposed to the side in a second direction D2. Here, the second direction D2 may be understood as, for example, the upward direction or the +Z-axis direction.

The second cell array structure 200 may be stacked on the first cell array structure 100. For example, the first cell array structure 100 may be disposed under the second cell array structure 200 or may be disposed in the -Z-axis direction relative thereto, and the second cell array structure 200 may be stacked on the first cell array structure 100 or disposed in the +Z-axis direction relative thereto. Accordingly, the first cell array structure 100 may form a first layer, and the second cell array structure 200 may form a second layer.

The first connecting bus-bar 300 may be a bus-bar that electrically connects the first cell array structure 100 and the second cell array structure 200 stacked on each other. For example, the first connecting bus-bar 300 may electrically connect a first electrode terminal 130, which will be described later, of the first cell array structure 100 to a second electrode terminal 230, which will be described later, of the second cell array structure 200.

The first end frame 120 and the second end frame 220 may have different electrode terminal structures. That is, the electrode terminal structure of the first end frame 120 and the electrode terminal structure of the second end frame 220 may be configured differently from each other. For example, the first electrode terminal 130 of the first cell array structure 100, to be described below, and the second electrode terminal 230 of the second cell array structure 200, to be described below, may have different structures.

Specifically, the electrode terminal structure of the first end frame 120 and the electrode terminal structure of the second end frame 220 may be configured differently from each other so as to optimize the electrical connection between the first cell array structure 100 and the second cell array structure 200 stacked on each other. Here, optimization may be understood to include optimization for productivity, electrical stability, and/or energy efficiency of the battery pack 10. For example, the electrode terminal structure of the first end frame 120 and the electrode terminal structure of the second end frame 220 may be configured differently so as to optimize the structure of the first connecting bus-bar 300.

In the battery pack 10 according to the present disclosure, the first cell array structure 100 and the second cell array structure 200 may be configured to be identical to each other, excluding the first end frame 120 and the second end frame 220.

In the case of a conventional battery pack including a plurality of cell array structures, a component such as a bus-bar is applied to electrically connect the cell array structures to each other. Such a conventional battery pack may have a problem of stability of the electrical connection structure of a component such as a bus-bar, and as the number of battery cells increases, the structural connection of a component such as a bus-bar becomes more complex, so that the current path also becomes more complex. In addition, since a component such as a bus-bar is a resistor with an electric resistance that increases in proportion to its length, as the length increases, the energy efficiency of the battery pack is lowered and the productivity also decreases. Accordingly, although optimization of components such as bus-bars or electrode terminal structures to which components such as bus-bars are connected may be applied to the conventional battery pack, in this case, fragmentation may increase between the configurations or components of the cell array structures, which may reduce the productivity of the battery pack.

However, the battery pack 10 according to the present disclosure may have the first end frame 120 and the second end frame 220 configured in different electrode terminal structures from each other, thereby optimizing the electrical connection between the first cell array structure 100 and the second cell array structure 200. In addition, the first cell array structure 100 and the second cell array structure 200 may be configured identically to each other, excluding the first end frame 120 and the second end frame 220, in the battery pack 10 according to the present disclosure, so that the commonality ratio between the first cell array structure 100 and the second cell array structure 200 may be significantly increased, thereby significantly improving the productivity of the battery pack 10.

The first cell array structure 100 may include a first electrode terminal 130. The first electrode terminal 130 may include a 1-1st electrode terminal 131 and a 1-2nd electrode terminal 132.

The 1-1st electrode terminal 131 may have a first polarity. The first polarity may be a positive polarity or a negative polarity. The 1-1st electrode terminal 131 may be disposed to the side in a third direction D3. The third direction D3 may be, for example, the right direction or the +Y-axis direction as shown in the drawing.

The 1-2nd electrode terminal 132 may have a second polarity. The second polarity may be different from the first polarity, among the negative polarity or the positive polarity. The 1-2nd electrode terminal 132 may be disposed to the side in a fourth direction D4. The fourth direction D4 may be, for example, the left direction or the -Y-axis direction as shown in the drawing. The third direction D3 and the fourth direction D4 may be opposite directions.

The second cell array structure 200 may have a second electrode terminal 230. The second electrode terminal 230 may include a 2-1st electrode terminal 231 and a 2-2nd electrode terminal 232.

The 2-1st electrode terminal 231 may have a first polarity. The 2-1st electrode terminal 231 may be disposed to the side in the third direction D3.

The 2-2nd electrode terminal 232 may have a second polarity. The 2-2nd electrode terminal 232 may be disposed to the side in the fourth direction D4.

That is, the 1-1st electrode terminal 131 of the first cell array structure 100 and the 2-1st electrode terminal 231 of the second cell array structure 200 may have the same polarity of the first polarity, and may be disposed to the side in the third direction D3. In addition, the 1-2nd electrode terminal 132 of the first cell array structure 100 and the 2-2nd electrode terminal 232 of the second cell array structure 200 may have the same polarity of the second polarity, and may be disposed to the side in the fourth direction D4.

The distance (first length L1) between the 1-2nd electrode terminal 132 and the 2-1st electrode terminal 231 may be formed shorter than the distance (second length L2) between the 1-1st electrode terminal 131 and the 2-2nd electrode terminal 232.

For example, when both the first end frame 120 and the second end frame 220 are viewed from one side or in the X-axis direction so as to overlap each other, the 2-1st electrode terminal 231 may be disposed more toward the first direction D1 and/or the four direction D4 than the 1-1st electrode terminal 131. The area A indicated by the dotted line in FIG. 3 is a projection of the virtual 1-1st electrode terminal 131' onto the second end frame 220 in the case where the first end frame 120 overlaps the second end frame 220 in the X-axis direction. Referring specifically to FIG. 3, it will be more clearly understood that the 2-1st electrode terminal 231 may be disposed more toward the first direction D1 and/or the fourth direction D4 than the 1-1st electrode terminal 131, and that the first length L1 is formed shorter than the second length L2.

The first connecting bus-bar 300 may electrically connect the 1-2nd electrode terminal 132 and the 2-1st electrode terminal 231. The current of the first connecting bus-bar 300 may flow approximately along the direction of the first length L1.

In the stacked first cell array structure 100 and second cell array structure 200, the shorter the first length L1, the shorter the length of the first connecting bus-bar 300. Therefore, if the first end frame 120 and the second end frame 220 have different electrode terminal structures so that the first length L1 is formed shorter than the second length L2, the length of the first connecting bus-bar 300 may be further shortened.

If the length of the first connecting bus-bar 300 is shortened, not only may the electric resistance of the first connecting bus-bar 300 be reduced, but the cost of the first connecting bus-bar 300 may also be reduced, and the weight of the battery pack 10 may be reduced.

Meanwhile, in the descriptions above and below, unlike what is shown in the drawings, the third direction D3 may be the left direction or the -Y-axis direction, and the fourth direction D4 may be the opposite direction of the third direction D3.

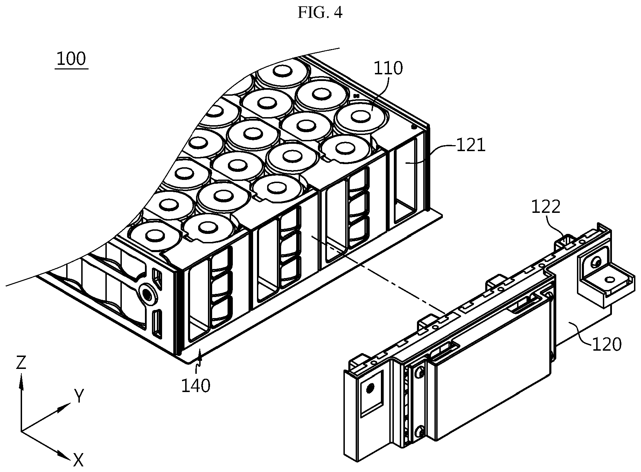

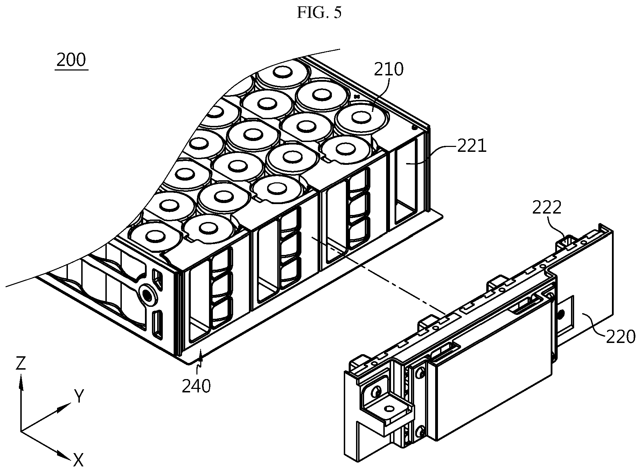

FIG. 4 is a perspective view illustrating a first end frame separated from a first cell array structure in a battery pack 10 according to an embodiment of the present disclosure, and FIG. 5 is a perspective view illustrating a second end frame separated from a second cell array structure in a battery pack according to an embodiment of the present disclosure.

Hereinafter, the first end frame 120 and the second end frame 220 according to an embodiment of the present disclosure will be described in more detail with reference to FIGS. 4 and 5.

The first end frame 120 may be coupled to one end of the first cell array structure 100. For example, an insertion groove 121 may be formed at one end of the first cell array structure 100, and an insertion portion 122 that may be inserted into the insertion groove 121 may be formed in the first end frame 120, so that the first end frame 120 may be coupled to the first cell array structure 100 by coupling between the insertion groove 121 and the insertion portion 122. Meanwhile, the insertion groove 121 may be formed on a side frame 140, which will be described below.

The second end frame 220 may be coupled to one end of the second cell array structure 200. For example, an insertion groove 221 may be formed at one end of the second cell array structure 200, and an insertion portion 222 that may be inserted into the insertion groove 221 may be formed in the second end frame 220, so that the second end frame 220 may be coupled to the second cell array structure 200 by coupling with the insertion groove 221 and the insertion portion 222. Meanwhile, the insertion groove 221 may be formed on a side frame 240, which will be described later.

The insertion groove 121 of the first cell array structure 100 and the insertion groove 221 of the second cell array structure 200 may be configured to be substantially identical to each other. The insertion portion 122 of the first end frame 120 and the insertion portion 222 of the second end frame 220 may be configured to be substantially identical to each other. In this case, the commonality ratio of the first cell array structure 100 and the second cell array structure 200 may be further increased.

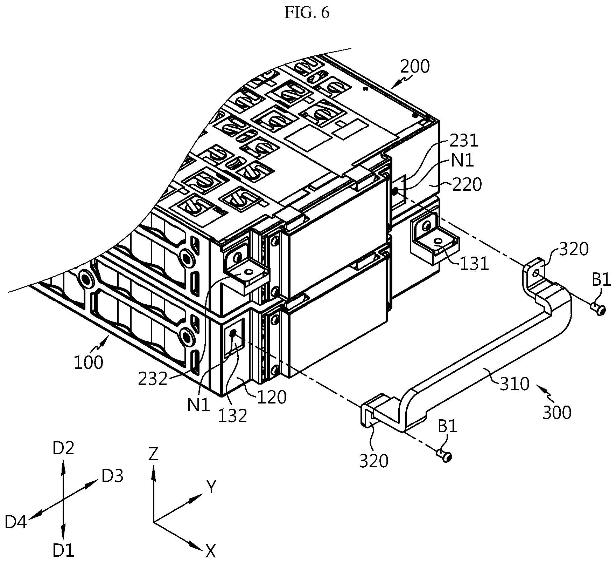

FIG. 6 is an enlarged perspective view illustrating a first connecting bus-bar separated from a first cell array structure and a second cell array structure stacked on each other in a battery pack according to an embodiment of the present disclosure.

Hereinafter, the 1-2nd electrode terminal 132, the 2-1st electrode terminal 231, and the first connecting bus-bar 300 of the battery pack 10 according to an embodiment of the present disclosure will be described in more detail with reference to FIG. 6.

Each of the 1-2nd electrode terminal 132 and the 2-1st electrode terminal 231 may be configured in a flat shape. Specifically, the 1-2nd electrode terminal 132 and the 2-1st electrode terminal 231 may be provided in a flat shape having a non-protruding surface exposed to have a predetermined area in the first end frame 120 and the second end frame 220, respectively. For example, the 1-2nd electrode terminal 132 and the 2-1st electrode terminal 231 may be provided in a flat shape that has a plane perpendicular to the X-axis direction with a predetermined area, and is exposed toward the +X-axis direction.

In the case where the 1-2nd electrode terminal 132 and the 2-1st electrode terminal 231 are provided in a flat shape as described above, the portions of the first connecting bus-bar 300, which are connected to the 1-2nd electrode terminal 132 and the 2-1st electrode terminal 231, may also be provided in a flat shape corresponding to the 1-2nd electrode terminal 132 and the 2-1st electrode terminal 231. In this case, the first connecting bus-bar 300 may be more easily configured in a plate shape having a thickness in one direction and a width in a direction perpendicular to the thickness direction. In the case where the first connecting bus-bar 300 is configured in a plate shape as described above, the first connecting bus-bar 300 may be more closely attached to the first cell array structure 100 and the second cell array structure 200, so that the energy density of the battery pack 10 may be improved.

The battery pack 10 according to the present disclosure may further include a first fastening member B1 for connecting the first connecting bus-bar 300 to the 1-2nd electrode terminal 132 and the 2-1st electrode terminal 231. The first fastening member B1 may be fastened in a direction parallel to the direction in which the non-protruding surfaces of the 1-2nd electrode terminal 132 and the 2-1st electrode terminal 231 face. Specifically, as described above, the 1-2nd electrode terminal 132 and the 2-1st electrode terminal 231 may have non-protruding surfaces exposed to a predetermined area, and the first fastening member B1 may be fastened to the 1-2nd electrode terminal 132 and the 2-1st electrode terminal 231 in a direction parallel to the direction in which the non-protruding surfaces face. For example, the first fastening member B1 may be fastened to the 1-2nd electrode terminal 132 and the 2-1st electrode terminal 231 in the -X-axis direction.

When the first fastening member B1 is fastened as described above, the first fastening member B1 may be firmly fastened to the 1-2nd electrode terminal 132 and the 2-1st electrode terminal 231, so that the first connecting bus-bar 300 may be firmly coupled to the first cell array structure 100 and the second cell array structure 200. In addition, the space occupied by the first fastening member B1 may be minimized, so that the energy density of the battery pack 10 may be improved.

Meanwhile, the first fastening member B1 may be, for example, a bolt, a rivet, or a rivet bolt. A first fastening port N1 to which the first fastening member B1 is fastened may be formed in the 1-2nd electrode terminal 132 and the 2-1st electrode terminal 231, and the first fastening port N1 may be provided to correspond to the first fastening member B1.

Meanwhile, the first connecting bus-bar 300 may have a first bus-bar body 310 and a first connection portion 320. The first bus-bar body 310 may form the overall appearance of the first connecting bus-bar 300. The first connection portion 320 may indicate a portion connected to the 1-2nd electrode terminal 132 and the 2-1st electrode terminal 231. The first connection portions 320 may be disposed at both ends of the first connecting bus-bar 300. The first connection portions 320 may be connected to the 1-2nd electrode terminal 132 and the 2-1st electrode terminal 231 by the first fastening members B1. The first bus-bar body 310 may further include an insulating cover that surrounds the outer surface and extends to an area adjacent to the first connection portion 320.

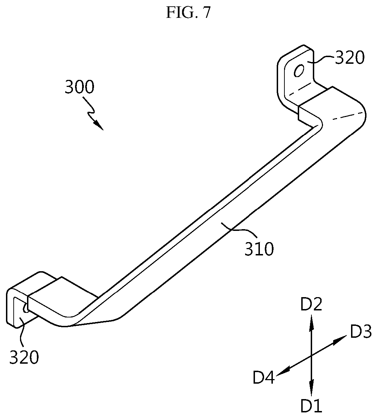

FIG. 7 is a perspective view illustrating a first connecting bus-bar of a battery pack according to a modified embodiment of the present disclosure.

Hereinafter, the first connecting bus-bar 300 according to a modified embodiment of the present disclosure will be described in detail with reference to FIG. 7.

The first connecting bus-bar 300 according to a modified embodiment of the present disclosure may connect the 1-2nd electrode terminal 132 and the 2-1st electrode terminal 231 with the shortest distance. Specifically, the first connecting bus-bar 300 may be formed to extend to the shortest distance between the 1-2nd electrode terminal 132 and the 2-1st electrode terminal 231. For example, the first bus-bar body 310 of the first connecting bus-bar 300 may be formed in the shape of a diagonal straight line between the 1-2nd electrode terminal 132 and the 2-1st electrode terminal 231 when viewed from one side. For example, in order to avoid interference with a component (e.g., a BMS or the like to be described later) protruding from the first end frame 120 and the second end frame 220, a portion adjacent to the first connection portion 320 of the first bus-bar body 310 may be configured to be partially bent toward the first connection portion 320. In addition, an unbent portion of the first bus-bar body 310 may be formed to extend to the shortest distance between the 1-2nd electrode terminal 132 and the 2-1st electrode terminal 231.

In the case where the first connecting bus-bar 300 is configured as described above, the current path length between the 1-2nd electrode terminal 132 and the 2-1st electrode terminal 231 may be minimized, so that the electrical stability, energy efficiency, and energy density of the battery pack 10 may be improved.

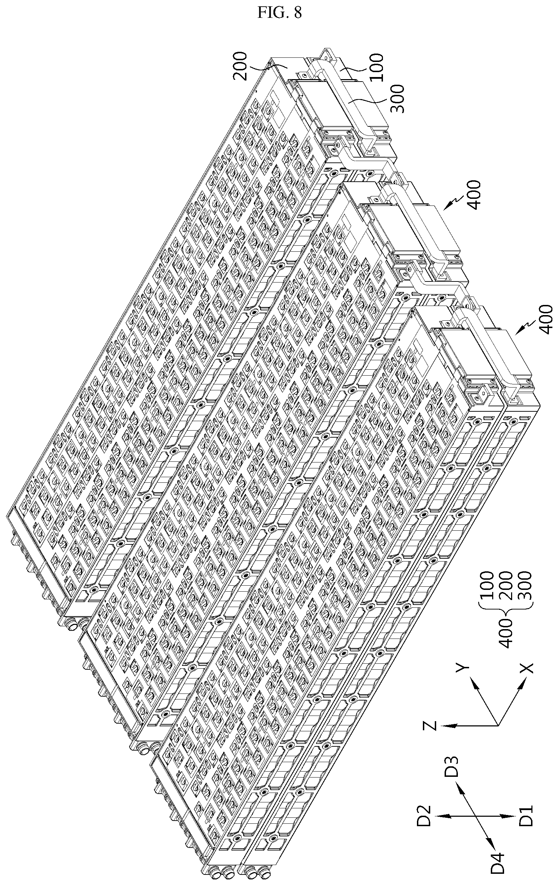

FIG. 8 is a perspective view illustrating a plurality of stack assemblies disposed in a battery pack according to an embodiment of the present disclosure.

Hereinafter, a battery pack 10 according to an embodiment of the present disclosure will be described in detail with reference to FIG. 8. The battery pack 10 according to an embodiment of the present disclosure may include a plurality of stack assemblies 400 and at least one second connecting bus-bar 500.

The first cell array structure 100 and the second cell array structure 200 stacked on each other and the first connecting bus-bar 300 electrically connected to the first cell array structure 100 and the second cell array structure 200 may be configured into one stack assembly 400. That is, the stack assembly 400 may be understood as a unit assembly structure of the first cell array structure 100 and the second cell array structure 200 stacked on each other and the first connecting bus-bar 300. The battery pack 10 according to an embodiment of the present disclosure may include a plurality of stack assemblies 400 described above.

The second connecting bus-bar 500 may be a bus-bar that electrically connects two stack assemblies 400 that are adjacent to each other. That is, the first connecting bus-bar 300 may be a bus-bar that electrically connects the first cell array structure 100 and the second cell array structure 200 in one stack assembly 400, and the second connecting bus-bar 500 may be a bus-bar that electrically connects two adjacent stack assemblies 400 to each other. At least one second connecting bus-bar 500 may be included.

As described above, in the case where the battery pack 10 includes a plurality of stack assemblies 400 and at least one second connecting bus-bar 500, the energy capacity of the battery pack 10 may be easily increased.

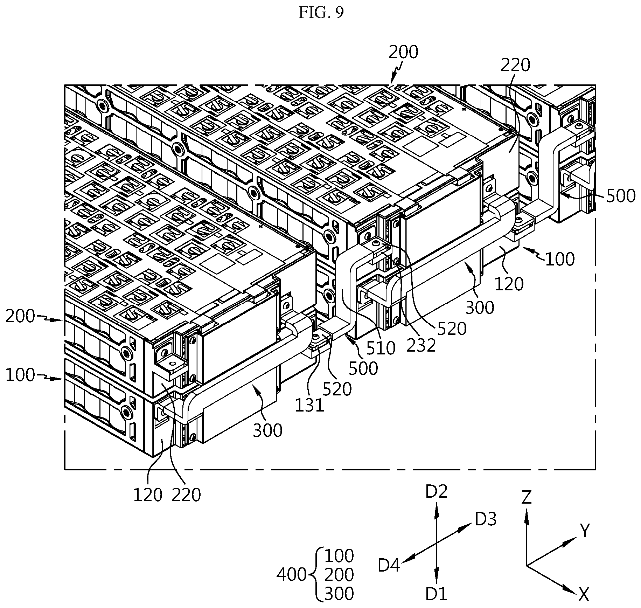

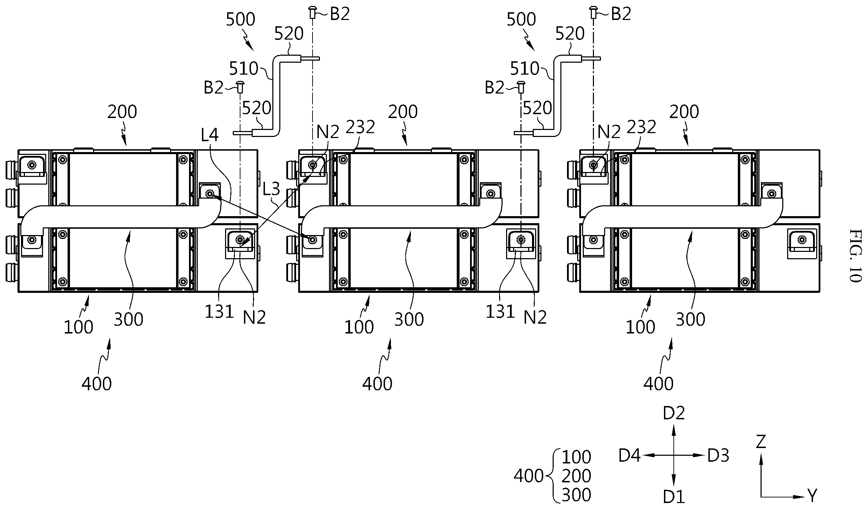

FIG. 9 is an enlarged perspective view illustrating a plurality of stack assemblies disposed in a battery pack according to an embodiment of the present disclosure, and FIG. 10 is a front view illustrating a battery pack in which a second connecting bus-bar is separated from a plurality of stack assemblies according to an embodiment of the present disclosure.

Hereinafter, a battery pack 10 according to an embodiment of the present disclosure will be described in more detail with reference to FIGS. 9 and 10.

Among the plurality of stack assemblies 400, two adjacent stack assemblies 400 may be arranged in parallel in the third direction D3 or the fourth direction D4. The second connecting bus-bar 500 may electrically connect the 1-1st electrode terminal 131 of the stack assembly 400 disposed to the side in the fourth direction D4 and the 2-2nd electrode terminal 232 of the stack assembly 400 disposed to the side in the third direction D3 between two adjacent stack assemblies 400.

When the second connecting bus-bar 500 is coupled as described above, the energy capacity of the battery pack 10 may be increased while improving the commonality ratio and energy efficiency of the battery pack 10.

In two stack assemblies 400 adjacent to each other, the distance (third length L3) between the 1-1st electrode terminal 131 of the stack assembly 400 disposed to the side in the fourth direction D4 and the 2-2nd electrode terminal 232 of the stack assembly 400 disposed to the side in the third direction D3 may be formed shorter than the distance (fourth length L4) between the 2-1st electrode terminal 231 of the stack assembly 400 disposed to the side in the fourth direction D4 and the 1-2nd electrode terminal 132 of the stack assembly 400 disposed to the side in the third direction D3. In this case, the current of the second connecting bus-bar 500 may flow approximately along the direction of the third length L3.

In the case where a plurality of stack assemblies 400 are disposed, the shorter the third length L3, the shorter the length of the second connecting bus-bar 500. Accordingly, if the first end frame 120 and the second end frame 220 have different electrode terminal structures so that the third length L3 is formed shorter than the fourth length L4, the length of the second connecting bus-bar 500 may be further shortened.

When the length of the second connecting bus-bar 500 is shortened, not only may the electric resistance of the second connecting bus-bar 500 be reduced, but the cost of the second connecting bus-bar 500 may also be reduced, and the weight of the battery pack 10 may be reduced.

The 1-1st electrode terminal 131 and the 2-2nd electrode terminal 232 may be configured in a protruding shape. Specifically, the 1-1st electrode terminal 131 and the 2-2nd electrode terminal 232 may be configured to protrude to a predetermined length so as to have a protruding surface facing at least one of the first direction D1 and the second direction D2, respectively. For example, the 1-1st electrode terminal 131 and the 2-2nd electrode terminal 232 may be configured in a protruding shape so as to protrude in the +X-axis direction and have a surface facing at least one of the upward direction (or the +Z-axis direction) and downward direction (or the -Z-axis direction). The second connecting bus-bar 500 may be provided in a shape corresponding to the 1-1st electrode terminal 131 and the 2-2nd electrode terminal 232.

In the case where the 1-1st electrode terminal 131 and the 2-2nd electrode terminal 232 are configured as described above, even in cases where the space for connection with the second connecting bus-bar 500 is very limited, such as when a plurality of stack assemblies 400 are stored in a pack case 600 to be described later, the second connecting bus-bar 500 may be inserted in the first direction D1 or the second direction D2, so that the difficulty of assembling the second connecting bus-bar 500 may be reduced.

The battery pack 10 according to the present disclosure may further include a second fastening member B2 that connects the second connecting bus-bar 500 to the 1-1st electrode terminal 131 and the 2-2nd electrode terminal 232. The second fastening member B2 may be fastened in a direction parallel to the direction in which the protruding surfaces of the 1-1st electrode terminal 131 and the 2-2nd electrode terminal 232 face. Specifically, as described above, the 1-1st electrode terminal 131 and the 2-2nd electrode terminal 232 may have protruding surfaces facing at least one of the first direction D1 and the second direction D2, and the second fastening members B2 may be fastened to the 1-1st electrode terminal 131 and the 2-2nd electrode terminal 232 in the first direction D1 or the second direction D2.

In the case where the second fastening member B2 is fastened as described above, the second fastening member B2 may be firmly fastened to the 1-1st electrode terminal 131 and the 2-2nd electrode terminal 232, so that the second connecting bus-bar 500 may be firmly connected to the adjacent stack assemblies 400.

Meanwhile, the second fastening member B2 may be, for example, a bolt, a rivet, or a rivet bolt. Meanwhile, a second fastening port N2 to which the second fastening member B2 is fastened may be formed in the 1-1st electrode terminal 131 and the 2-2nd electrode terminal 232, and the second fastening port N2 may be configured to correspond to the second fastening member B2.

Meanwhile, the second connecting bus-bar 500 may include a second bus-bar body 510 and a second connection portion 520. The second bus-bar body 510 may form the overall appearance of the second connecting bus-bar 500. The second connection portion 520 may indicate a portion connected to the 1-1st electrode terminal 131 and the 2-2nd electrode terminal 232. The second connection portions 520 may be disposed at both ends of the second connecting bus-bar 500. The second connection portions 520 may be connected to the 1-1st electrode terminal 131 and the 2-2nd electrode terminal 232 by the second fastening members B2. The second bus-bar body 510 may further include an insulating cover that surrounds the outer surface and extends to an area adjacent to the second connection portion 520.

Meanwhile, in the battery pack 10 according to an embodiment of the present disclosure, the electrode terminals that are not connected to the first connecting bus-bar 300 and the second connecting bus-bar 500, among the electrode terminals of the stack assembly 400 disposed at the outermost side, may be electrode terminals that are electrically connected to an external device that requires power supply, such as a vehicle. For example, the 2-2nd electrode terminal 232 of the stack assembly 400 disposed on the outermost side in the fourth direction D4 and the 1-1st electrode terminal 131 of the stack assembly 400 disposed on the outermost side in the third direction D3 may be electrode terminals that are electrically connected to an external device, respectively.

In addition, a part of the assembly process of a battery pack 10 according to an embodiment of the present disclosure will be described in detail with reference to FIG. 10.

An assembly process of a battery pack 10 according to an embodiment of the present disclosure may include a process (a) of assembling a plurality of stack assemblies 400, a process (b) of aligning the plurality of stack assemblies 400, and a process (c) of electrically connecting the plurality of aligned stack assemblies 400 with second connecting bus-bars 500.

In the process (a), the first connecting bus-bar 300 may be connected to the first cell array structure 100 and the second cell array structure 200 that are stacked on each other. In this case, for example, the first connecting bus-bar 300 may be connected to the 1-2nd electrode terminal 132 and the 2-1st electrode terminal 231 configured in a flat shape by the first fastening members B1.

In the process (b), a plurality of stack assemblies 400 may be arranged or aligned along the third direction D3 and the fourth direction D4. In the process (b), the plurality of stack assemblies 400 may be stored and aligned inside a pack case 600 to be described below. In this case, respective sides of the plurality of stack assemblies 400 may be blocked by the pack case 600 to be described below.

In the process (c), the second connecting bus-bar 500 is inserted between two adjacent stack assemblies 400 among the plurality of aligned stack assemblies 400, and the inserted second connecting bus-bar 500 may electrically connect the two adjacent stack assemblies 400. In this case, for example, the 1-1st electrode terminal 131 and the 2-2nd electrode terminal 232 may be configured in a protruding shape, and the second connecting bus-bar 500 and the second fastening member B2 may be inserted in the first direction D1. In this case, in the process (c), the second connecting bus-bar 500 and the second fastening member B2 are not subject to interference with the pack case 600 to be described below, thereby facilitating the fastening of the second connecting bus-bar 500 by the second fastening member B2 and improving the productivity and assemblability of the battery pack 10.

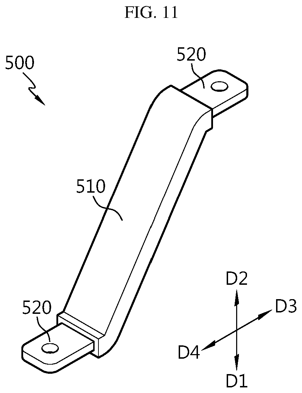

FIG. 11 is a perspective view illustrating a second connecting bus-bar of a battery pack according to another modified embodiment of the present disclosure.

Hereinafter, a second connecting bus-bar 500 according to another modified embodiment of the present disclosure will be described in detail with reference to FIG. 11.

The second connecting bus-bar 500 according to another modified embodiment of the present disclosure may connect the 1-1st electrode terminal 131 and the 2-2nd electrode terminal 232 with the shortest distance. Specifically, in two adjacent stack assemblies 400, the second connecting bus-bar 500 may connect the 1-1st electrode terminal 131 of a stack assembly 400 disposed to the side in the fourth direction D4 and the 2-2nd electrode terminal 232 of a stack assembly 400 disposed to the side in the third direction D3 with the shortest distance.

Specifically, the second connecting bus-bar 500 may be formed to extend to the shortest distance between the 1-1st electrode terminal 131 and the 2-2nd electrode terminal 232. For example, a second bus-bar body 510 of the second connecting bus-bar 500 may be formed in the shape of a diagonal straight line between the 1-1st electrode terminal 131 and the 2-2nd electrode terminal 232 when viewed from one side.

In the case where the second connecting bus-bar 500 is configured as described above, the current path length between the 1-1st electrode terminal 131 of the stack assembly 400 disposed to the side in the fourth direction D4 and the 2-2nd electrode terminal 232 of the stack assembly 400 disposed to the side in the third direction D3 may be minimized, so that the electrical stability, energy efficiency, and energy density of the battery pack 10 may be improved.

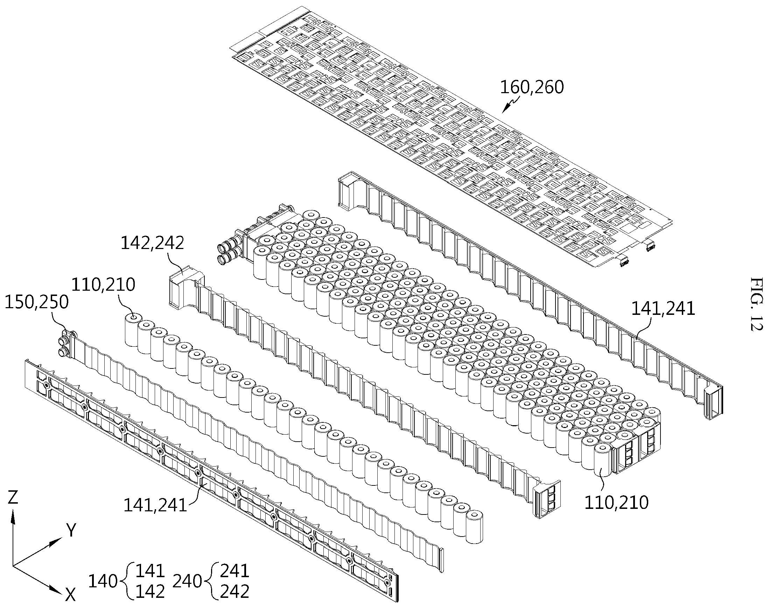

FIG. 12 is an exploded perspective view illustrating a first cell array structure and a second cell array structure of a battery pack according to an embodiment of the present disclosure.

Hereinafter, a first cell array structure 100 and a second cell array structure 200 according to an embodiment of the present disclosure will be described in more detail with reference to FIG. 12.

The components, excluding the first end frame 120 and the second end frame 220, of the first cell array structure 100 and the second cell array structure 200 according to an embodiment of the present disclosure may be configured to be identical to each other.

For example, the first cell array structure 100 may further include a side frame 140, a cooling unit 150, and a bus-bar assembly 160, in addition to a plurality of battery cells 110. The side frame 140 may be configured to store and support a plurality of battery cells 110. The side frame 140 may include a side wall 141 disposed at the outermost side and storing and supporting the plurality of battery cells 110 on one side. The side frame 140 may include a side structure 142 disposed on the inner side of the side wall 141 and storing and supporting the plurality of battery cells 110 on both sides. A plurality of cooling units 150 may be disposed between the plurality of battery cells 110 and may cool the plurality of battery cells 110. The bus-bar assembly 160 may be configured to be electrically connected to the plurality of battery cells 110, and may be electrically connected to the first electrode terminal 130 or the second electrode terminal 230.

For example, the second cell array structure 200 may include a plurality of battery cells 210, a side frame 240, a cooling unit 250, and a bus-bar assembly 260, which are the same as the plurality of battery cells 110, the side frame 140, the cooling unit 150, and the bus-bar assembly 160 of the first cell array structure 100.

In the case where the first cell array structure 100 and the second cell array structure 200 are configured as described above, there is an advantage in which the first cell array structure 100 and the second cell array structure 200 may be all shared, excluding the first end frame 120 and the second end frame 220. In this case, the productivity of the battery pack 10 may be significantly improved.

Referring back to FIG. 1, the pack case 600 of the battery pack 10 according to the present disclosure will be described in detail. The battery pack 10 according to the present disclosure may include a pack case 600. The pack case 600 may have a storage space to store the first cell array structure 100 and the second cell array structure 200. The pack case 600 may have a storage space to store a plurality of stack assemblies 400. The pack case 600 may include configurations such as a side wall, a bottom plate, and a pack lid.

Meanwhile, the battery pack 10 according to the present disclosure may further include various devices for controlling charging and discharging of battery cells 100, such as a BMS (Battery Management System), a current sensor, a fuse, although not shown.

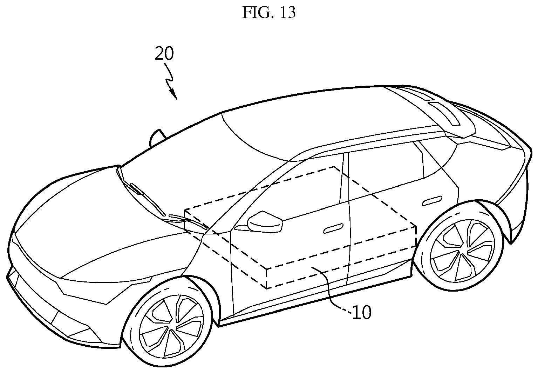

FIG. 13 is a drawing illustrating a vehicle according to an embodiment of the present disclosure.

Referring to FIG. 13, the battery pack 10 according to the present disclosure may be applied to a vehicle 20, such as an electric vehicle or a hybrid vehicle. That is, the vehicle 20 according to the present disclosure may include the battery pack 10 according to the present disclosure. The battery pack 10 may be installed in the body frame under the vehicle seat or in the trunk space. In addition, the vehicle 20 according to an embodiment of the present disclosure may further include various other components included in the vehicle, in addition to the battery pack 10. For example, the vehicle 20 according to an embodiment of the present disclosure may further include a car body, a motor, a control device such as an ECU (electronic control unit), and the like, in addition to the battery pack 10 according to an embodiment of the present disclosure.

In addition, it is obvious that the battery pack 10 according to an embodiment of the present disclosure may be applied to other devices, equipment, and facilities, such as an energy storage system using a secondary battery, in addition to the vehicle 20.

Although terms indicating directions such as up, down, left, right, front, and back are used in this specification, it is obvious to those skilled in the art to which the present disclosure pertains that these terms are only for convenience of explanation with reference the relevant drawings and may vary depending on the position of the target object or the position of the observer.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

### [Description of Reference numerals]

10: Battery pack
20: Vehicle
100: First cell array structure
110: Battery cell
120: First end frame
121: Insertion groove
122: Insertion portion
130: First electrode terminal
131: 1-1st electrode terminal
132: 1-2nd electrode terminal
140: Side frame
141: Side wall
142: Side structure
150: Cooling unit
160: Bus-bar assembly
200: Second cell array structure
210: Battery cell
220: Second end frame
221: insertion groove
222: Insertion portion
230: Second electrode terminal
231: 2-1st electrode terminal
232: 2-2nd electrode terminal
240: Side frame
241: Side wall
242: Side structure
250: Cooling unit
260: Bus-bar assembly
300: First connecting bus-bar
310: First bus-bar body
320: first connection portion
400: Stack assembly
500: second connecting bus-bar
510: Second bus-bar body
520: Second connection portion
600: Pack case
D1: First direction
D2: Second direction
D3: Third direction
D4: Fourth direction
L1: First length
L2: Second length
B1: First fastening member
N1: First fastening port
B2: Second fastening member
N2: Second fastening port

## Claims

1. A battery pack comprising:
a first cell array structure having a plurality of battery cells and a first end frame at one end, and disposed to a side in a first direction;
a second cell array structure having a plurality of battery cells and a second end frame at one end, and disposed to a side in a second direction so as to be stacked with the first cell array structure; and
a first connecting bus-bar configured to electrically connect the first cell array structure and the second cell array structure stacked on each other,
wherein the first end frame and the second end frame have different electrode terminal structures.

2. The battery pack according to claim 1,
wherein the first cell array structure comprises:
a 1-1st electrode terminal having a first polarity and disposed to a side in a third direction; and
a 1-2nd electrode terminal having a second polarity and disposed to a side in a fourth direction,
wherein the second cell array structure comprises:
a 2-1st electrode terminal having the first polarity and disposed to the side in the third direction; and
a 2-2nd electrode terminal having the second polarity and disposed to the side in the fourth direction,
wherein a distance between the 1-2nd electrode terminal and the 2-1st electrode terminal is configured to be shorter than a distance between the 1-1st electrode terminal and the 2-2nd electrode terminal, and
wherein the first connecting bus-bar is configured to electrically connect the 1-2nd electrode terminal and the 2-1st electrode terminal.

3. The battery pack according to claim 2,
wherein the first connecting bus-bar
is configured to connect the 1-2nd electrode terminal and the 2-1st electrode terminal with a shortest distance.

4. The battery pack according to claim 2,
wherein the 1-2nd electrode terminal and the 2-1st electrode terminal are configured in a flat shape having a non-protruding surface exposed to a predetermined area in the first end frame and the second end frame, respectively.

5. The battery pack according to claim 4,
further comprising a first fastening member configured to connect the first connecting bus-bar to the 1-2nd electrode terminal and the 2-1st electrode terminal,
wherein the first fastening member is fastened in a direction parallel to a direction in which the non-protruding surfaces of the 1-2nd electrode terminal and the 2-1st electrode terminal face.

6. The battery pack according to claim 2, further comprising:
a plurality of the stack assemblies each configured as the first cell array structure and the second cell array structure stacked on each other and the first connecting bus-bar electrically connected to the first cell array structure and the second cell array structure; and
at least one second connecting bus-bar configured to electrically connect two adjacent stack assemblies.

7. The battery pack according to claim 6,
wherein the second connecting bus-bar
is configured to electrically connect the 1-1st electrode terminal of the stack assembly disposed to the side in the fourth direction and the 2-2nd electrode terminal of the stack assembly disposed to the side in the third direction between the two adjacent stack assemblies.

8. The battery pack according to claim 7,
wherein a distance between the 1-1st electrode terminal of the stack assembly disposed to the side in the fourth direction and the 2-2nd electrode terminal of the stack assembly disposed to the side in the third direction between the two adjacent stack assemblies is configured to be shorter than a distance between the 2-1st electrode terminal of the stack assembly disposed to the side in the fourth direction and the 1-2nd electrode terminal of the stack assembly disposed to the side in the third direction.

9. The battery pack according to claim 7,
wherein the second connecting bus-bar
is configured to connect the 1-1st electrode terminal of the stack assembly disposed to the side in the fourth direction and the 2-2nd electrode terminal of the stack assembly disposed to the side in the third direction with a shortest distance.

10. The battery pack according to claim 7,
wherein the 1-1st electrode terminal and the 2-2nd electrode terminal are configured in a protruding shape to protrude by a predetermined length from the first end frame and the second end frame, respectively, so as to have a protruding surface facing at least one of the first direction and the second direction.

11. The battery pack according to claim 10,
further comprising a second fastening member configured to connect the second connecting bus-bar to the 1-1st electrode terminal and the 2-2nd electrode terminal,
wherein the second fastening member is fastened in a direction parallel to a direction in which the protruding surfaces of the 1-1st electrode terminal and the 2-2nd electrode terminal face.

12. The battery pack according to claim 1,
wherein components, excluding the first end frame and the second end frame, of the first cell array structure and the second cell array structure are configured to be identical to each other.

13. A vehicle comprising at least one battery pack according to any one of claims 1 to 12.
